Europäisches Patentamt

**European Patent Office**

**Office européen des brevets**

(11) Numéro de publication: **0 352 392 B1**

# FASCICULE DE BREVET EUROPEEN

(45) Date de publication de fascicule du brevet: **15.04.92**   (51) Int. Cl.⁵: **B60T 13/52**, B60T 17/22

(21) Numéro de dépôt: **88401995.1**

(22) Date de dépôt: **29.07.88**

(54) **Procédé de réglage de la course morte d'un servomoteur d'assistance au freinage.**

(43) Date de publication de la demande:
**31.01.90 Bulletin 90/05**

(45) Mention de la délivrance du brevet:
**15.04.92 Bulletin 92/16**

(84) Etats contractants désignés:
**DE ES GB IT**

(56) Documents cités:
**EP-A- 0 153 888**
**EP-A- 0 242 269**
**GB-A- 2 064 690**

(73) Titulaire: **BENDIX EUROPE Services Techniques S.A.**
**126 rue de Stalingrad**
**F-93700 Drancy(FR)**

(72) Inventeur: **Gautier, Jean-Pierre**
**46 Ter Avenue Louis Blanc**
**F-93600 Aulnay sous Bois(FR)**
Inventeur: **Perez, Miguel**
**19 rue Gambetta**
**F-95100 Argenteuil(FR)**

## Description

L'invention concerne un procédé permettant de régler avec précision la course morte d'un servomoteur d'assistance au freinage, avant son installation sur un véhicule.

L'invention s'applique avantageusement à tous les véhicules automobiles dont le circuit de freinage est équipé d'un servomoteur.

L'invention concerne en particulier un servomoteur d'assistance au freinage tel que celui qui est décrit dans EP-A-0 242 269.

Le servomoteur décrit dans ce document est de conception classique. Il comprend notamment une enveloppe extérieure dans laquelle un chambre avant et une chambre arrière sont formées de part et d'autre d'une membrane souple, fixée de façon étanche sur un piston creux mobile selon l'axe du servomoteur. La chambre avant est reliée en permanence à une source de vide, alors que la chambre arrière communique par l'intermédiaire de deux valves contrôlées par un clapet commun, soit avec la chambre avant, soit avec l'atmosphère extérieure. Les positions occupées par ces valves dépendent de la position d'une tige de commande reliée à la pédale de frein et disposée selon l'axe du servomoteur, à l'intérieur du piston creux. Plus précisément, l'extrémité avant de la tige de commande porte un plongeur qui dispose d'un jeu axial prédéterminé à l'intérieur du piston.

Ce jeu est tel que le clapet commun aux deux valves est en appui étanche sur un siège de valve formé sur le plongeur et dégagé d'un siège de valve formé sur le piston lorsque la tige de commande occupe sa position arrière de repos. La chambre arrière communique alors avec la chambre avant et le piston est appliqué contre une surface de butée arrière formée sur l'enveloppe extérieure, sous l'action d'un ressort de rappel.

Au contraire, le clapet commun aux deux valves est en appui étanche sur le siège de valve formé sur le piston et espacé du siège de valve formé sur le plongeur lorsque la tige de commande est déplacée vers l'avant sous l'effet d'un actionnement de la pédale de frein. La communication entre les chambres avant et arrière est alors interrompue et cette dernière est mise en communication avec l'atmosphère extérieure. Le piston du servomoteur se déplace donc vers l'avant sous l'effet de la différence de pression entre les chambres arrière et avant, entraînant dans son mouvement une tige de sortie du servomoteur, qui actionne le piston d'un maître cylindre du circuit de freinage. L'assistance au freinage est ainsi assurée.

La description qui précède fait apparaître que c'est la course dont dispose le plongeur à l'intérieur du piston du servomoteur qui détermine successivement, lors de l'actionnement de la pédale de frein, la fermeture de la première valve par laquelle les chambres avant et arrière communiquement entre elles au repos, puis l'ouverture de la deuxième valve par laquelle la chambre arrière est ensuite mise en communication avec l'atmosphère extérieure.

Dans le document précité, cette course est déterminée par deux organes de butée montés à l'intérieur du piston et placés entre deux épaulements en vis-à-vis formés sur le plongeur. L'un de ces organes de butée est une plaque appelée clé fixe qui est immobilisée dans le piston et détermine la position maximale vers l'avant du plongeur à l'intérieur du piston lors de l'actionnement de la pédale de frein. L'autre organe de butée est une plaque basculante, dite clé basculante dont une extrémité est articulée sur la clé fixe et dont l'extrémité opposée est repliée pour former une butée apte à venir en appui sur la surface de butée formé sur l'enveloppe extérieure du servomoteur, déterminant ainsi la position maximale arrière du plongeur lorsque la pédale de frein n'est pas actionnée.

Dans un tel servomoteur, on appelle course morte le déplacement vers l'avant de la tige de commande nécessaire à la fermeture de la première valve conduisant à interrompre toute communication entre les deux chambres. Cette course morte, qui correspond au jeu existant au repos entre le clapet et le siège de valve formé sur le piston, dépend des dimensions précises du piston, du plongeur et de la clé basculante. Compte tenu des tolérances de fabrication de ces trois pièces, la course morte des servomoteurs ainsi conçus peut donc varier dans des proportions importantes.

Afin de s'assurer qu'il existe toujours au repos une course morte suffisante pour que les chambres avant et arrière du servomoteur communiquent entre elles, la plupart des servomoteurs d'assistance au freinage ainsi réalisés présentent une course morte sensiblement supérirue à la course minimale garantissant cette communication.

Cette situation n'est cependant pas satisfaisante, car il est souhaitable que la course morte soit identique d'un servomoteur à un autre et surtout qu'elle soit aussi faible que possible, afin que l'intervention du servomoteur soit pratiquement instantanée lorsque le conducteur actionne la pédale. En pratique, une course morte inférieure à 0,1 mm est souhaitée.

La présente invention a précisément pour objet un procédé de réglage de la course morte d'un tel servomoteur, permettant d'effectuer un réglage suffisamment précis pour que la course morte soit très faible (par exemple moins de 0,1 mm) et pratiquement uniforme d'un servomoteur à l'autre, ce réglage pouvant être effectué en automatique lors de l'assemblage du servomoteur.

Conformément à l'invention, ce résultat est obtenu au moyen d'un procédé de réglage de la course morte d'un servomoteur d'assistance au freinage comprenant une enveloppe extérieure, un piston creux, mobile axialement dans ladite enveloppe ; un premier moyen élastique tendant à déplacer ce piston vers une position arrière de repos dans laquelle une surface d'appui du piston est en contact avec une surface de butée de l'enveloppe extérieure ; une tige de commande disposée selon l'axe du piston et portant un plongeur à une extrémité avant ; un deuxième moyen élastique tendant à déplacer la tige de commande vers une position arrière de repos ; un clapet de valve monté de façon étanche à l'intérieur du piston creux, autour de la tige de commande ; un troisième moyen élastique tendant à déplacer le clapet de valve vers l'avant pour l'amener en contact avec un premier siège de valve formé sur le plongeur, lorsque la tige de commande occupe sa position arrière de repos, et avec un deuxième siège de valve formé sur le piston, lorsque la tige de commande est déplacée vers l'avant sur une distance supérieure à ladite course morte ; un organe de butée fixe monté dans le piston creux et sur lequel vient en appui le plongeur lorsque la tige de commande est déplacée vers l'avant ; et un organe de butée basculant dont une extrémité est articulée sur l'organe de butée fixe et dont l'extrémité opposée porte une butée calibrée, la position arrière de repos de la tige de commande étant déterminée par la venue en appui du plongeur sur l'organe de butée basculant, la butée calibrée étant en appui sur ladite surface de butée de l'enveloppe ; ce procédé de réglage étant caractérisé en ce qu'il comprend les étapes suivantes :

- le plongeur et sa tige de commande, le clapet de valve, les deuxième et troisième moyens élastiques, l'organe de butée fixe et l'organe de butée basculant étant montés dans le piston, on amène la surface d'appui du piston en contact avec une surface de référence, et on neutralise l'action du deuxième moyen élastique sur la tige de commande, de sorte que le clapet est appliqué contre le deuxième siège de valve par le troisième moyen élastique, et
- on calibre la butée de l'organe de butée basculant en donnant à cette butée une dimension telle que lorsque le premier siège de valve est en contact avec le clapet, la butée calibrée en contact avec la surface de référence et l'organe de butée basculant en contact avec le plongeur, une course morte désirée existe entre le deuxième siège de valve et le clapet.

Selon un mode de réalisation préféré de l'invention, l'organe de butée basculant est initialement non équipé de sa butée lorsqu'on amène la surface d'appui du piston en appui sur la surface de référence et lorsqu'on neutralise l'action du deuxième moyen élastique sur la tige de commande. Après avoir amené le premier siège de valve en contact avec le clapet, on calibre alors la butée en mesurant le déplacement de l'organe de butée basculant non équipé de sa butée entre deux positions extrêmes dans lesquelles cet organe est respectivement en contact avec la surface de référence et avec le plongeur, et en retranchant à ce déplacement mesuré la course morte désirée.

De préférence, on mesure alors le déplacement de l'organe de butée basculant en déplaçant cet organe entre les positions extrêmes au moyen d'un levier équipé d'un capteur de déplacement.

Pour effectuer le réglage, on introduit initialement le piston dans un fourreau de réglage sur lequel est formée la surface de référence, on applique la surface d'appui du piston sur cette surface de référence en exerçant sur le piston une première force supérieure à la force exercée par le deuxième moyen élastique, et on neutralise l'action de ce dernier sur la tige de commande en exerçant sur une extrémité de ce deuxième moyen élastique normalement en appui sur la tige une deuxième force orientée en sens inverse de la première force, cette deuxième force, inférieure à la première, étant également supérieure à la force exercée par le deuxième moyen élastique.

L'extrémité du deuxième moyen élastique étant normalement en appui sur un épaulement de la tige de commande par l'intermédiaire d'une rondelle derrière laquelle est placée une douille entourant cette tige, on applique la deuxième force sur la douille au moyen d'une fourchette que l'on introduit dans le fourreau de réglage.

On peut notamment amener le premier siège de valve en contact avec le clapet en exerçant sur le plongeur une troisième force orientée dans le même sens que la première force, cette troisième force étant inférieure à la force exercée sur le clapet par le troisième moyen élastique.

Un mode de réalisation préféré de l'invention va maintenant être décrit, à titre d'exemple nullement limitatif, en se référant aux dessins annexés dans lesquels :

- la figure 1 est une vue de côté en coupe longitudinale, représentant la partie centrale d'un servomoteur d'assistance au freinage dont le réglage de la course morte peut être effectué conformément à l'invention, les moitiés haute et basse de la figure illustrant respectivement les positions occupées par les différentes pièces au repos et lors d'un actionnement assisté de la pédale de frein,
- la figure 2 est une vue en coupe longitudinale représentant une partie du servomoteur de la figure 1 lors de son réglage à l'aide du procédé selon l'invention, et

- la figure 3 est une vue fragmentaire représentant à plus grande échelle la partie centrale du servomoteur, après le calibrage de la butée de la clé basculante.

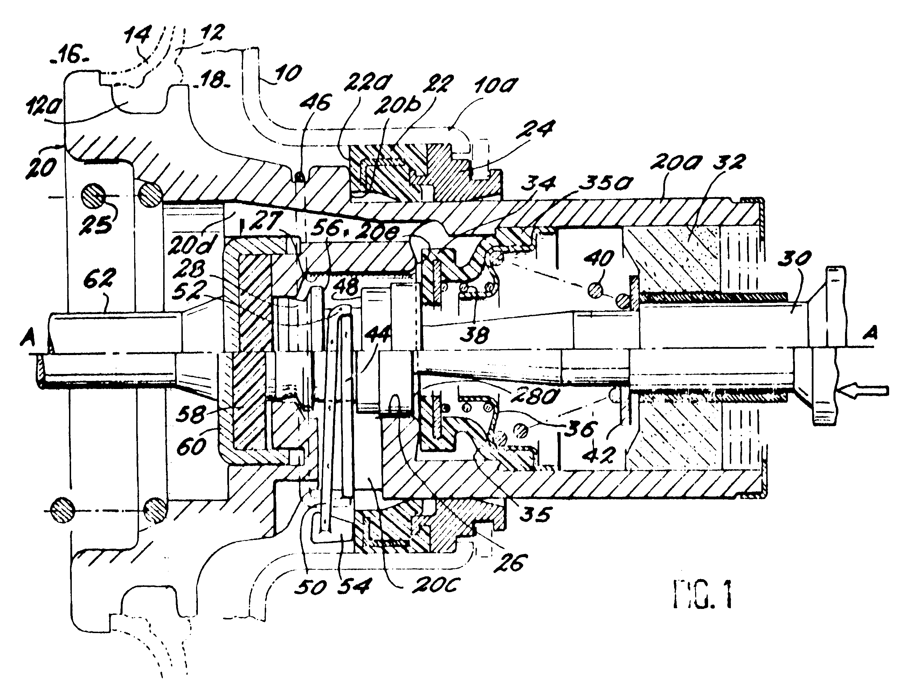

La figure 1 représente une partie d'un servomoteur d'assistance au freinage prévu pour être placé de façon habituelle entre la pédale de frein d'un véhicule et le maître cylindre commandant le circuit de freinage hydraulique. Par convention, on appelle avant du servomoteur la partie de ce dernier tournée vers le maître cylindre et arrière du servomoteur la partie tournée vers la pédale de frein.

Le servomoteur de la figure 1 comprend une enveloppe extérieure 10 en forme de coquille, présentant une symétrie de révolution autour d'un axe A-A. Seule la partie centrale arrière de cette enveloppe 10 est représentée sur la figure 1.

Une membrane souple en élastomère 12, renforcée dans sa partie centrale par un disque support métallique 14, définit à l'intérieur de l'espace délimité par l'enveloppe 10 une chambre avant 16 et une chambre arrière 18. Le bord périphérique extérieur (non représenté) de la membrane 12 est fixé de façon étanche sur l'enveloppe extérieure 10, alors que le bord périphérique intérieur de cette même membrane se termine par un bourrelet 12a reçu de façon étanche dans une gorge annulaire formée sur la surface périphérique extérieure d'un piston creux 20 disposé selon l'axe A-A du servomoteur. Ce piston creux 20 se prolonge vers l'arrière sous la forme d'une partie tubulaire 20a qui traverse de façon étanche la paroi arrière de l'enveloppe 10. L'étanchéité de cette traversée est assurée par un joint d'étanchéité annulaire armé 22 qui est fixé par une bague 24 dans une partie centrale tubulaire 10a prolongeant vers l'arrière la paroi arrière de l'enveloppe 10.

La face avant plane 22a du joint d'étanchéité 22 constitue une surface de butée contre laquelle est appliqué un épaulement 20b formé sur la surface extérieure du piston 20 et constituant une surface d'appui, lorsque le servomoteur est au repos. L'application de la surface d'appui 20b contre la surface de butée 22a est assurée par un ressort de compression 25 interposé entre le piston 20 et la paroi avant (non représentée) de l'enveloppe extérieure 10.

Dans sa partie centrale située entre la partie arrière tubulaire 20a et la partie avant dans laquelle est fixée la membrane 12, le piston 20 présente un passage étagé 26 comportant des couloirs longitudinaux 27 de circulation d'air. La partie avant de ce passage, de plus petit diamètre, reçoit en coulissement l'extrémité avant d'un plongeur 28 présentant également une symétrie de révolution autour de l'axe A-A. Ce plongeur 28 est solidarisé de l'extrémité avant d'une tige de commande 30 disposée également selon l'axe A-A. L'extrémité arrière de cette tige 30, qui fait saillie au-delà de l'extrémité arrière de la partie tubulaire 20a du piston 20, est commandée directement par la pédale de frein (non représentée).

L'espace annulaire délimité entre la tige de commande 30 et la partie tubulaire 20a du piston 20 débouche vers l'extérieur, à l'arrière du servomoteur, au travers d'un filtre à air annulaire 32. Vers l'avant, ce même espace annulaire peut communiquer avec la chambre arrière 18 au travers d'un passage radial 20c formé dans la partie centrale du piston, la communication étant contrôlée par une valve qui va maintenant être décrite.

Cette valve comprend un siège de valve annulaire 28a formé sur la face d'extrémité arrière du plongeur 28 et un clapet annulaire 34 monté dans la partie tubulaire 20a du piston. Ce clapet 34 est solidaire de l'extrémité avant de plus petit diamètre d'un manchon souple 35, en élastomère, dont l'extrémité arrière se termine par un bourrelet monté de façon étanche à l'intérieur de la partie tubulaire 20a. Ce bourrelet 35a est maintenu en place par une plaque métallique 36 sur laquelle prend appui un ressort de compression 38 tendant à déplacer le clapet 34 vers l'avant, pour le plaquer de façon étanche contre le siège 28a.

Un second passage 20d est formé dans la partie centrale du piston 20, approximativement parallèlement à son axe A-A, pour faire communiquer la chambre avant 16 du servomoteur avec une chambre annulaire formée autour du clapet 34, à l'intérieur de la partie tubulaire 20a du piston. Les chambres avant 16 et arrière 18 peuvent ainsi communiquer entre elles au travers des passages 20c et 20d, sous le contrôle d'une autre valve. Cette valve est délimitée entre le clapet 34 et un siège de valve annulaire 20e formé sur la face d'extrémité arrière de la partie centrale du piston 20.

Un ressort de compression 40 prend appui par son extrémité avant sur la plaque 36 et par son extrémité arrière sur un épaulement formé sur la tige de commande 30, au travers d'une rondelle 42. Ce ressort 40 permet de rappeler vers l'arrière la tige de commande 30, lors du relâchement de la pédale de frein. Secondairement, il maintient en place le bourrelet 35a du manchon souple 35 portant le clapet 34.

Comme cela a été décrit en détail dans la demande de brevet n° 86 05857 déposée le 23 avril 1986 par la Société BENDIX FRANCE, la course axiale dont dispose le plongeur 28 à l'intérieur du la partie centrale du piston 20 est limitée par deux organes de butée.

Un premier de ces organes de butée, appelé clé fixe, est constitué par une plaque 44 montée perpendiculairement à l'axe A-A, dans le passage 26 formé dans la partie centrale du piston 20. Cette plaque 44 peut notamment être reçue dans des glissières en vis-à-vis (non représentées) formées à l'intérieur du piston 20, et maintenue en place par les extrémités recourbées d'un ressort 46 monté dans une gorge annulaire formée dans le piston.

La clé fixe 44 est disposée en vis-à-vis d'un épaulement 48 tourné vers l'avant formé sur le plongeur 28. En cas de défaillance de l'assistance l'épaulement 48 vient en appui sur la clé 44 pour transmettre mécaniquement au piston 20 l'effort de freinage exercé sur la tige 30.

Les organes de butée montés dans la partie centrale du piston 20 comprennent également un organe de butée basculant, appelé clé basculante, constitué par une plaque 50 dont une extrémité est articulée en 52 sur la clé fixe 44 et dont l'extrémité opposée fait saillie radialement au travers du passage 20c. Conformément à l'invention, cette dernière extrémité de la clé basculante 50 porte un organe calibré 54 apte à venir en appui sur la surface de butée 22a. Dans ces conditions, comme l'illustre la figure 1, la clé basculante 50 fait un certain angle avec la clé fixe 44 et elle constitue une butée sur laquelle peut venir en appui un épaulement 56 formé sur le plongeur 28 et tourné vers l'arrière, de façon à faire face à l'épaulement 48.

Un disque de réaction 58 en un matériau élastomère est maintenu en contact avec la face avant de la partie centrale du piston 20 par une coupelle métallique 60. Cette coupelle 60 est fixée à l'extrémité arrière d'une tige de sortie 62 du servomoteur, dont l'extrémité avant actionne le piston d'un maître-cylindre (non représenté).

Lorsque le servomoteur qui vient d'être décrit est installé sur un véhicule, la chambre avant 16 communique en permanence avec une source de vide.

Lorsque la pédale de frein n'est pas actionnée, les différents éléments du servomoteur occupent les positions représentées sur la moitié supérieure de la figure 1. En particulier, le ressort de rappel 40 maintient la tige de commande 30 et le plongeur 28 dans leur position extrême arrière, dans laquelle l'épaulement 56 du plongeur est an appui sur la clé basculante 50, la butée calibrée 54 portée par cette dernière étant elle-même en appui sur la surface de butée 22a. Dans ces conditions, le siège 28a du plongeur est en appui étanche sur le clapet 34, ce dernier étant écarté du siège 20e du piston d'une distance correspondant à la course morte du servomoteur.

Les chambres avant 16 et arrière 18 communiquent alors entre elles par le passage 20d, le jeu formé entre le siège 20e et le clapet 34, et le passage 20c. En revanche, la valve commandant la communication de la chambre arrière 18 avec l'atmosphère extérieure est fermée. Les deux chambres 16 et 18 sont donc sous vide et la position du piston 20 est déterminée par l'action du ressort de compression 25, qui plaque la surface d'appui 20b du piston contre la surface de butée 22a.

Lorsque le conducteur du véhicule actionne la pédale de frein, la tige de commande 30 et le plongeur 28 se déplacent vers l'avant. Ce déplacement est sans effet sur le piston 20 tant que la course morte existant au repos entre le clapet 34 et le siège de valve 20e n'est pas rattrapée. Ensuite, le clapet 34 vient en appui étanche sur le siège 20e, interrompant ainsi la communication entre les chambres 16 et 18 du servomoteur.

Le déplacement vers l'avant du plongeur 28 dans le piston 20 se poursuit jusqu'à ce que le siège de valve 28a soit légèrement écarté du clapet 34. La chambre arrière 18 du servomoteur est alors mise en communication avec l'atmosphère extérieure par le passage 20c, le passage formé entre le siège 28a et le clapet 34 et l'espace annulaire délimité entre la partie tubulaire 20a du piston et la tige de commande 30. La différence de pression qui apparaît alors entre la chambre arrière 18 et le chambre avant 16, toujours sous vide, déplace le piston 20 vers l'avant, ce qui permet d'assister pneumatiquement l'action mécanique de freinage, tant que le déplacement vers l'avant de la tige de commande se poursuit.

Le déplacement de la tige 62 commandant le maître cylindre est donc assuré par le déplacement du piston 20 du servomoteur.

Lorsque la pédale de frein est relâchée, les différents éléments constituant le servomoteur retrouvent les positions représentées sur la moitié supérieure de la figure 1, notamment sous l'action des ressorts 40 et 26.

Conformément à l'invention, la course morte existant au repos entre le clapet 34 et le siège de valve 20e formé sur le piston 20 est réglée en usine, de préférence automatiquement, lors de l'assemblage du servomoteur. Ce réglage permet de garantir l'uniformité de la course morte d'un servomoteur à l'autre, malgré les différences de dimensions pouvant exister à la fois sur le piston 20 et sur le plongeur 28 en raison des tolérances de fabrication de ces deux pièces. Ce réglage permet également de donner à la course morte une valeur très faible garantissant une intervention très rapide de l'assistance lors du freinage.

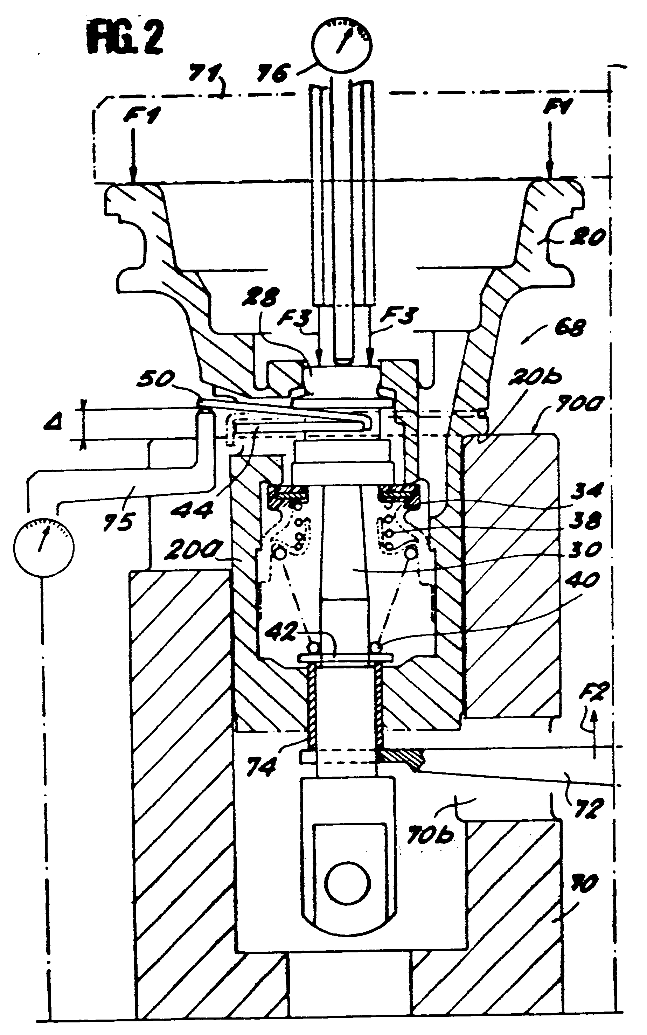

Comme l'illustre la figure 2, le réglage de la course morte s'effectue après qu'un sous-ensemble 68 comprenant le piston 20, la tige de commande 30, le plongeur 28, le clapet 34, les ressorts 38 et 40 et les clés 44 et 50 ait été assemblé. En revanche, il est à noter que ce réglage est effectué avant le montage de la butée calibrée 54 à l'extrémité de la clé basculante 50.

Pour effectuer ce réglage, le sous-ensemble qui vient d'être défini est introduit dans un fourreau de réglage 70 dont le diamètre intérieur est légèrement supérieur au diamètre extérieur de la partie tubulaire 20a du piston 20. Par conséquent, seule cette partie tubulaire 20a du piston pénètre à l'intérieur du fourreau 70.

Au moyen d'un organe approprié schématisé en 71, tel qu'un vérin, on applique sur l'extrémité avant du piston 20 une force axiale F1 très supérieure à la force exercée par le ressort 40. Cette force F1 permet de maintenir en permanence, au cours des opérations suivantes, la surface d'appui 20b du piston 20 contre une surface plane de référence 70a formée à l'extrémité du fourreau 70.

On introduit ensuite radialement par rapport à l'axe commun du sous-ensemble 68 et du fourreau 70 une fourchette 72, au travers d'un trou 70b formé dans le fourreau. Ce trou débouche au-delà de l'extrémité de la partie tubulaire 20a du piston 20. L'extrémité de la fourchette 72 peut ainsi être placée en appui sur la face arrière d'une douille 74 entourant avec un certain jeu axial une partie de grand diamètre de la tige de commande 30, située à l'arrière de l'épaulement, sur laquelle est en appui la rondelle 42. En exerçant sur la douille 74, à l'aide de la fourchette 72, un effort axial F2 orienté vers l'avant, on neutralise l'action du ressort 40 sur la tige de commande 30. A cet effet, la force F2 appliquée sur la fourchette 72 est supérieure à la charge en place du ressort 40.

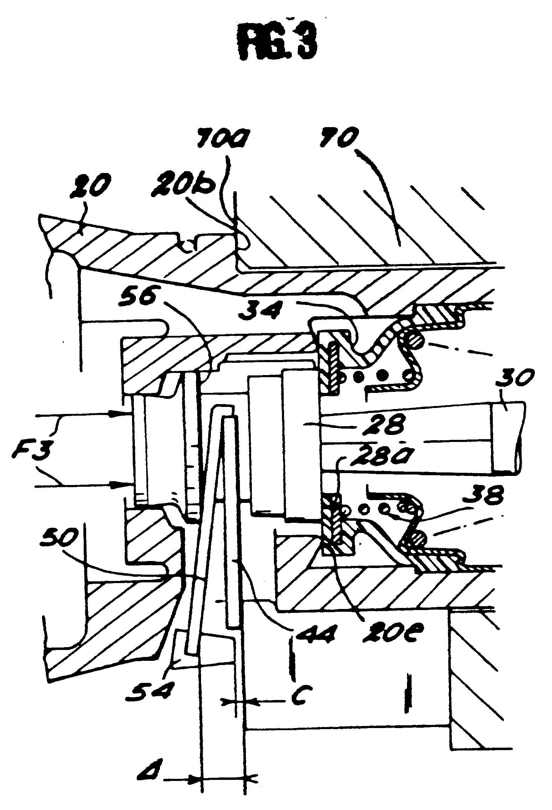

L'action du ressort 40 sur la tige de commande 30 étant supprimée, le clapet de valve 34 vient en appui sur le siège 20e formé sur le piston (figure 3), sous l'action du ressort 38.

Pour terminer les préparatifs nécessaires au réglage, on applique sur l'extrémité avant du plongeur 28 une force axiale F3, à l'aide de tout moyen approprié tel qu'un vérin. Cette force F3 a pour but de maintenir le siège de valve 28a formé sur le plongeur en contact avec le clapet 34 (figure 3). Cette force F3 doit cependant être inférieure à la charge en place minimale du ressort 38, afin que le clapet 34 reste également en appui sur le siège 20e formé sur le piston. En pratique, cette force est comprise entre environ 0,7 et 0,8 daN.

Lorsque les différents organes constituant le sous-ensemble 68 préalablement assemblé occupent les positions qui viennent d'être indiquées, le réglage de la course morte peut être effectué de la façon suivante.

La clé basculante 50, qui se présente alors sous la forme d'une simple plaque plane, est d'abord amenée en appui sur la face de référence 70a du fourreau. Un palpeur 75 équipé d'un enregistreur de déplacement est ensuite amené en appui sur la face de la clé basculante 50 appliquée sur la face de référence 70a, à l'extrémité de cette clé. En déplaçant le palpeur 75 vers l'avant en prenant pour origine la face de référence 70a, on entraîne la clé basculante jusqu'à son contact avec l'épaulement 56 (figure 3) formé sur le plongeur 28. Ce contact est détecté par un capteur de déplacement 76 maintenu en appui sur l'extrémité avant du plongeur 28. Dès que le contact entre la clé basculante 50 et le plongeur 28 est détecté par le capteur 76, le palpeur 75 est immobilisé.

La valeur $\Delta$ du déplacement de la clé basculante 50 mesurée par le palpeur 75 est ensuite utilisée pour calibrer la butée 54 (figure 3), avant son emboîtement sur la clé basculante. En pratique, la longueur de la butée calibrée 54 à partir de la face de la clé basculante 50 tournée vers la face de référence 70a est égale au déplacement $\Delta$ mesuré, diminué d'une valeur $\bar{c}$ (figure 3) correspondant à la course morte que l'on désire obtenir sur le servomoteur. Cette valeur $\bar{c}$ est voisine de 0,2 mm si la course morte désirée est inférieure à 0,1 mm, compte tenu des bras de levier différents au niveau de la butée 54 et au niveau de la butée 56, de la clé basculante 50 par rapport à sa charnière 52.

Bien que les opérations qui précèdent puissent être effectuées manuellement, elles sont de préférence automatisées dans le cadre d'un procédé de montage et de réglage en série du servomoteur.

Lorsque la butée calibrée 54 est fixée à l'extrémité de la clé basculante 50, l'assemblage du servomoteur se poursuit de façon classique.

En variante, il est à noter que le calibrage de la butée peut se faire à partir d'un sous-ensemble identique au sous-ensemble 68, mais dans lequel la clé basculante 50 porte initialement une butée 54 non calibrée à son extrémité. Cette butée 54 est alors conçue de façon à pouvoir se déformer par écrasement, sous l'effet d'une force appliquée directement sur l'extrémité de la clé basculante 50 et venant écraser celle-ci contre la face de référence formée à l'extrémité du fourreau de réglage.

Dans ce cas, les forces F1 et F2 sont appliquées de la même manière que cela vient d'être décrit en se référant à la figure 2, de même que la force F3, qui a alors pour effet de plaquer la butée contre la surface de référence, alors que le siège de valve 28a formé sur le plongeur 28 reste écarté du clapet 34. On écrase ensuite progessivement la butée 54 en exerçant sur l'extrémité de la clé basculante une force suffisante à l'aide d'un levier. Cet écrasement est effectué jusqu'à ce qu'on détecte à l'aide d'un palpeur la venue en contact du siège de valve 28a formé sur le plongeur avec le clapet 34. Afin d'obtenir la course morte souhaitée, cet écrasement est poursuivi sur une distance permettant d'obtenir cette course morte entre le siège 20e et le clapet 34.

Dans le mode de réalisation précédemment décrit en se référant à la figure 2, ainsi que dans la variante qui vient d'être mentionnée, il est à noter que la suppression de l'action du ressort 40 sur la tige de commande 30 peut ne pas être obtenue au moyen d'une fourchette telle que la fourchette 72 sur la figure 2, mais grâce à une surface d'appui prévue à l'intérieur du fourreau de réglage et agissant sur l'extrémité arrière de la douille 74 pour dégager automatiquement la rondelle 42 de l'épaulement formé sur la tige de commande lorsque le piston 20 est appliqué contre la face de référence 70a du fourreau par la force F1.

On ne sortirait pas du cadre de la présente invention en appliquant le procédé de réglage décrit ci-dessus à des servomoteurs autres que ceux illustrés sur les dessins. Par exemple, ce procédé s'applique aussi aux servomoteurs décrits dans FR-A-2 469 589 et EP-A-0 242 269 déposée le 8 avril 1986 par la demanderesse. Les adaptations nécessaires peuvent être réalisées sans difficulté par l'homme de métier. Par exemple, pour ce qui concerne le servomoteur de la demande FR-A-2 469 589, il suffit de prévoir deux butées calibrées disposées chacune à une des extrémités des bras de la clé.

## Revendications

1. Procédé de réglage de la course morte d'un servomoteur d'assistance au freinage comprenant une enveloppe extérieure (10), un piston creux (20), mobile axialement dans ladite enveloppe ; un premier moyen élastique (26) tendant à déplacer ce piston vers une position arrière de repos dans laquelle une surface d'appui (20b) du piston est en contact avec une surface de butée (22a) de l'enveloppe extérieure ; une tige de commande (30) disposée selon l'axe du piston et portant un plongeur (28) à une extrémité avant ; un deuxième moyen élastique (40) tendant à déplacer la tige de commande vers une position arrière de repos ; un clapet de valve (34) monté de façon étanche à l'intérieur du piston creux, autour de la tige de commande ; un troisième moyen élastique (38) tendant à déplacer le clapet de valve vers l'avant pour l'amener en contact avec un premier siège de valve (28a) formé sur le plongeur, lorsque la tige de commande occupe sa position arrière de repos, et avec un deuxième siège de valve (20e) formé sur le piston, lorsque la tige de commande est déplacée vers l'avant sur une distance supérieure à ladite course morte ; un organe de butée fixe (44) monté dans le piston creux et sur lequel vient en appui le plongeur lorsque la tige de commande est déplacée vers l'avant ; et un organe de butée basculant (5) dont une extrémité est articulée sur l'organe de butée fixe et dont l'extrémité opposée porte une butée calibrée (54), la position arrière de repos de la tige de commande étant déterminée par la venue en appui du plongeur (28) sur l'organe de butée basculant (50), la butée calibrée (54) étant en appui sur ladite surface de butée (22a) de l'enveloppe ; ce procédé de réglage étant caractérisé en ce qu'il comprend les étapes suivantes :
   - le plongeur (28) et sa tige de commande (30), le clapet de valve (34), les deuxième (40) et troisième (38) moyens élastiques, l'organe de butée fixe (44) et l'organe de butée basculant (50) étant montés dans le piston (20), on amène la surface d'appui (20b) du piston en contact avec une surface de référence (70a), et on neutralise l'action du deuxième moyen élastique (40) sur la tige de commande (30), de sorte que le clapet (34) est appliqué contre le deuxième siège de valve (20e) par le troisième moyen élastique (38), et
   - on calibre la butée (54) de l'organe de butée basculant (50) en donnant à cette butée une dimension telle que lorsque le premier siège de valve (28a) est en contact avec le clapet (34), la butée calibrée (54) en contact avec la surface de référence (70a) et l'organe de butée basculant (50) en contact avec le plongeur (28), une course morte désirée existe entre le deuxième siège de valve (20e) et le clapet (34).

2. Procédé de réglage selon la revendication 1, caractérisé en ce que l'organe de butée basculant (50) est initialement non équipé de sa butée (54) lorsqu'on amène la surface d'appui (20b) du piston en appui sur la surface de référence (70a) et lorsqu'on neutralise l'action du deuxième moyen élastique (40) sur la tige de commande (30), et en ce qu'on calibre la butée, après avoir amené le premier siège de valve (28a) en contact avec le clapet (34), en mesurant le déplacement ($\Delta$) de l'organe de butée basculant (50) non équipé de sa butée entre deux positions extrêmes dans lesquelles cet organe est respectivement en contact avec la surface de référence (70a) et avec le plongeur (28), et en retranchant à ce déplacement mesuré la course morte (c) désirée.

3. Procédé de réglage selon la revendication 2, caractérisé en ce qu'on mesure le déplacement de l'organe de butée basculant (50) en déplaçant cet organe entre lesdites positions extrêmes au moyen d'un capteur de déplacement (75).

4. Procédé de réglage selon l'une quelconque des revendications 1 à 3, caractérisé en ce qu'on introduit initialement le piston (20) dans un fourreau de réglage (70) sur lequel est formé la surface de référence (70a), on applique la surface d'appui (20b) du piston sur cette surface de référence en exerçant sur le piston une première force (F1) supérieure à la force exercée par le deuxième moyen élastique (40), et on neutralise l'action de ce dernier sur la tige de commande (30) en exerçant sur une extrémité de ce deuxième moyen élastique normalement en appui sur la tige une deuxième force (F2) orientée en sens inverse de la première force, cette deuxième force étant inférieure à la première et supérieure à la force exercée par le deuxième moyen élastique (40).

5. Procédé de réglage selon la revendication 4, caractérisé en ce que ladite extrémité du deuxième moyen élastique (40) étant normalement en appui sur un épaulement de la tige de commande (30) par l'intermédiaire d'une rondelle (42) derrière laquelle est placée une douille (74) entourant cette tige, on applique la deuxième force (F2) sur la douille au moyen d'une fourchette (72) que l'on introduit dans le fourreau de réglage (70).

6. Procédé de réglage selon l'une quelconque des revendications 2 et 3, prises en combinaison avec l'une quelconque des revendications 4 et 5, caractérisé en ce qu'on amène le premier siège de valve (28a) en contact avec le clapet (34) en exerçant sur le plongeur (28) une troisième force (F3) orientée dans le même sens que la première force (F1), cette troisième force étant inférieure à la force exercée sur le clapet par le troisième moyen élastique (38).

**Claims**

1. Procedure for setting the dead travel of a servo-motor for assistance during braking comprising an outer casing (10), a hollow piston (20), axially mobile in the said casing ; a first flexible means (26) tending to move this piston towards a rear rest position in which a bearing surface (20b) of the piston is in contact with a stop surface (22a) of the outer casing ; an operating pushrod (30) arranged according to the axis of the piston and having a plunger (28) at a front end ; a second flexible means (40) tending to move the operating pushrod towards a rear rest position ; a valve head (34) mounted sealingly in the inside of the hollow piston, around the operating pushrod ; a third flexible means (38) tending to move the valve head forward to bring it into contact with a first valve seat (28a) formed on the plunger, when the operating pushrod occupies its rear rest position, and with a second valve seat (20e) formed on the piston, when the operating pushrod is moved forward over a distance greater than the said dead travel ; a fixed stop member (44) mounted in the hollow piston and against which the plunger comes to rest when the operating pushrod is moved forward ; and a tilting stop member (50) one end of which is hinged on the fixed stop member and whose opposite end has a calibrated stop (54), the rear rest position of the operating pushrod being determined by the plunger (28) coming to rest on the tilting stop member (50), the calibrated stop (54) being up against the said stop surface (22a) of the casing ; this setting procedure being characterized in that it comprises the following stages :
   - the plunger (28) and its operating pushrod (30), the valve head (34), the second (40) and third (38) flexible means, the fixed stop (44) and the tilting stop member (50) being mounted in the piston (20), the bearing surface (20b) of the piston is brought into contact with a reference surface (70a), and the action of the second flexible means (40) on the operating pushrod (30) is neutralized, so that the valve head (34) is pushed against the second valve seat (20e) by the third flexible means (38), and
   - the stop (54) of the tilting stop member (50) is calibrated by giving a dimension to this stop such that when the first valve seat (28a) is in contact with the valve head (34), the calibrated stop (54) in contact with the reference surface (70a) and the tilting stop member (50) in contact with the plunger (28), a desired dead travel exists between the second valve seat (20e) and the valve head (34).

2. Setting procedure according to Claim 1, characterized in that the tilting stop member (50) is not equipped initially with its stop (54) when the bearing surface (20b) of the piston is brought to rest against the reference surface (70a) and when the action of the second flexible means (40) on the operating pushrod (30) is neutralized, and in that the stop is calibrated, after having brought the first valve seat (28a) in contact with the valve head (34), by measuring the movement ($\Delta$) of the tilting stop member (50), not equipped with its stop, between two extreme positions in which this member is in contact respectively with the reference surface (70a) and with the plunger (28), and by deducting the desired dead travel (c) from this measured movement.

3. Setting procedure according to Claim 2, characterized in that the movement of the tilting stop member (50) is measured by moving this member between the said extreme positions by means of a movement probe (75).

4. Setting procedure according to any one of Claims 1 to 3, characterized in that the piston (20) is inserted initially in a setting sleeve (70) on which the reference surface (70a) is formed, the bearing surface (20b) of the piston is pushed against this reference surface by exerting a first load (F1) on the piston greater than the load exerted by the second flexible means (40), and the action of this latter on the operating pushrod (30) is neutralized by exerting, on one end of this second flexible means normally resting on the pushrod, a second load (F2) directed in the opposite direction to the first load, this second load being less than the first and greater than the load exerted by the second flexible means (40).

5. Setting process according to Claim 4, characterized in that, the said end of the second flexible means (40) resting normally on a shoulder of the operating pushrod (30) via a washer (42) behind which a bush (74) is located surrounding this pushrod, the second load (F2) is applied on the bush by means of a fork (72) which is inserted in the setting sleeve (70).

6. Setting procedure according to either of Claims 2 and 3, taken in conjunction with either of Claims 4 and 5, characterized in that the first valve seat (28a) is brought into contact with the valve head (34) by exerting a third load (F3) on the plunger (28) directed in the same direction as the first load (F1), this third load being less than the load exerted on the valve head by the third flexible means (38).

**Patentansprüche**

1. Verfahren zum Einstellen des Totganges eines Bremskraftverstärkers, der versehen ist mit einer äußeren Ummantelung (10), einem Hohlkolben (20), der in der Ummantelung in axialer Richtung beweglich ist; einem ersten elastischen Mittel (26), das bestrebt ist, diesen Kolben in eine hintere Ruheposition zu verschieben, in der die Abstützfläche (20b) des Kolbens mit einer Anschlagfläche (22a) der äußeren Ummantelung in Kontakt ist; einer Steuerstange (30), die entlang der Mittelachse des Kolbens angeordnet ist und an einem vorderen Ende einen Tauchkolben (28) trägt; einem zweiten elastischen Mittel (40), das bestrebt ist, die Steuerstange in eine hintere Ruheposition zu verschieben; einem Ventilteller (34), der auf dichte Weise im Inneren des Hohlkolbens um die Steuerstange angebracht ist; einem dritten elastischen Mittel (38), das bestrebt ist, den Ventilteller nach vorne zu verschieben, um ihn mit einem am Tauchkolben ausgebildeten Ventilsitz (28a) in Kontakt zu bringen, wenn die Steuerstange ihre hintere Ruheposition einnimmt, und um ihn mit einem am Kolben ausgebildeten zweiten Ventilsitz (20e) in Kontakt zu bringen, wenn die Steuerstange über eine Entfernung, die größer als der Totgang ist, nach vorne verschoben ist; einem festen Anschlagelement (44), das am Hohlkolben angebracht ist und an dem sich der Tauchkolben abstützt, wenn die Steuerstange nach vorne verschoben ist; und einem kippbaren Anschlagelement (50), von dem ein Ende am festen Anschlagelement angelenkt ist und dessen gegenüberliegendes Ende einen kalibrierten Anschlag (54) trägt, wobei die hintere Ruheposition der Steuerstange durch die Abstützung des Tauchkolbens (28) am kippbaren Anschlagelement (50) bestimmt wird, wobei sich der kalibrierte Anschlag (54) auf der Anschlagfläche (22a) der Ummantelung abstützt; wobei das Einstellverfahren dadurch gekennzeichnet ist, daß es die folgenden Schritte umfaßt:
- Kontaktieren der Abstützfläche (20b) des Kolbens mit einer Bezugsfläche (70a), wenn der Tauchkolben (28) und seine Steuerstange (30), der Ventilsitz (34), das zweite (40) und das dritte (38) elastische Mittel, das feste Anschlagelement (44) und das kippbare Anschlagelement (50) montiert sind, und Aufheben der Wirkung des zweiten elastischen Mittels (40) auf die Steuerstange (30), derart, daß der Teller (34) vom dritten elastischen Mittel (38) gegen den zweiten Ventilsitz (20e) gedrückt wird, und
- Kalibrieren des Anschlags (54) des kippbaren Anschlagelements (50), indem diesem Anschlag eine Abmessung verliehen wird, derart, daß bei einer Kontaktierung des ersten Ventilsitzes (28a) mit dem Teller (34), bei Kontaktierung des kalibrierten Anschlags (50) mit der Bezugsfläche (70a) und bei Kontaktierung des kippbaren Anschlagelements (50) mit dem Tauchkolben (28) zwischen dem zweiten Ventilsitz (20e) und dem Teller (34) ein gewünschten Totgang vorhanden ist.

2. Einstellverfahren gemäß Anspruch 1, dadurch gekennzeichnet, daß das kippbare Anschlagelement (50) anfangs nicht mit seinem Anschlag (54) ausgerüstet ist, wenn die Anschlagfläche (20b) des Kolbens mit der Bezugsfläche (70a) in Kontakt gebracht wird und wenn die Wirkung des zweiten elastischen Mittels (40) auf die Steuerstange (30) aufgehoben wird, und daß der Anschlag kalibriert wird, nachdem der erste Ventilsitz (28a) mit dem Teller (34) in Kontakt gebracht worden ist, indem die Verschiebung (Δ) des nicht mit seinem Anschlag versehenen kippbaren Anschlagelements (50) zwischen zwei Endpositionen, in denen dieses Element mit der Bezugsfläche (70a) bzw. mit dem Tauchkolben (28) in Kontakt ist, gemessen wird, und indem der gewünschte Totgang (c) eingeschränkt wird.

3. Einstellverfahren gemäß Anspruch 2, dadurch gekennzeichnet, daß die Verschiebung des kippbaren Anschlagelements (50) dadurch gemessen wird, daß dieses Element zwischen den genannten Endpositionen mittels eines Verschiebungsmeßwertaufnehmers (75) verschoben wird.

4. Einstellverfahren gemäß einem der Ansprüche 1 bis 3, dadurch gekennzeichnet, daß der Kolben (20) anfangs in eine Einstellhülse (70) eingeführt wird, in der die Bezugsfläche (70a) ausgebildet ist, die Abstützfläche (20b) des Kolbens auf diese Bezugsfläche gedrückt wird, indem auf den Kolben eine erste Kraft (F1), die größer als die vom zweiten elastischen Mittel (40) ausgeübte Kraft ist, ausgeübt wird, und die Wirkung des zweiten elastischen Mittels (40) auf die Steuerstange (30) aufgehoben wird, indem auf ein Ende dieses zweiten elastischen Mittels, das sich normalerweise an der Stange abstützt, eine zweite Kraft (F2) ausgeübt wird, die der Richtung der ersten Kraft entgegengesetzt ist, wobei diese zweite Kraft geringer als die erste und größer als die vom zweiten elastischen Mittel (40) ausgeübte Kraft ist.

5. Einstellverfahren gemäß Anspruch 4, dadurch gekennzeichnet, daß das genannte Ende des zweiten elastischen Mittels (40) normalerweise über eine Scheibe (42), hinter der eine die Stange umgebende Buchse (74) angeordnet ist, an einem Ansatz der Steuerstange (30) abgestützt ist und auf die Buchse mittels eines Bügels (72), der in die Einstellhülse (70) eingeführt wird, die zweite Kraft (F2) ausgeübt wird.

6. Einstellverfahren gemäß einem der Ansprüche 2 und 3 in Kombination mit einem der Ansprüche 4 und 5, dadurch gekennzeichnet, daß der erste Ventilsitz (28a) mit dem Teller (34) in Kontakt gebracht wird, indem auf den Tauchkolben (28) eine dritte Kraft (F3) ausgeübt wird, die die gleiche Richtung wie die erste Kraft (F1) besitzt, wobei diese dritte Kraft geringer als die vom dritten elastischen Mittel (38) auf den Teller ausgeübte Kraft ist.

FIG. 1

FIG. 2

# FIG. 3